# FASCICULE DE BREVET EUROPEEN

(11) **EP 3 914 815 B1**
(45) Date de publication et mention de la délivrance du brevet: **17.04.2024**
(21) Numéro de dépôt: 19842387.3
(22) Date de dépôt: 09.12.2019
(51) Int. Cl.: F01N 11/00, F01N 3/10

(54) **PROCÉDÉ DE TEST D'EFFICACITÉ D'UN CATALYSEUR DE LIGNE D'ÉCHAPPEMENT D'UN MOTEUR THERMIQUE**
VERFAHREN ZUR ÜBERPRÜFUNG DER WIRKSAMKEIT EINES ABGASLEITUNGSKATALYSATORS EINES VERBRENNUNGSMOTORS
METHOD FOR TESTING THE EFFECTIVENESS OF A COMBUSTION ENGINE EXHAUST LINE CATALYTIC CONVERTER

(30) Priorité: 22.01.2019 FR 1900524
(43) Date de publication de la demande: 01.12.2021
(73) Titulaire: Stellantis Auto SAS, 78300 Poissy (FR)
(72) Inventeur: TARDY, Gerard, 92500 RUEIL MALMAISON (FR); DA SILVA, Jose, 95240 CORMEILLES EN PARISIS (FR); DUJARDIN, Nicolas, 78770 MARCQ (FR)
(86) Numéro de dépôt international: PCT/FR2019/052970
(87) Numéro de publication internationale: WO 2020/152403

(56) Documents cités:
- EP-A1- 2 772 636
- EP-A1- 3 067 527
- WO-A1-2016/146907
- DE-A1-102008 027 575
- US-A1- 2016 138 506

## Description

La présente invention porte sur un procédé de test d'efficacité d'un catalyseur de ligne d'échappement d'un moteur thermique. L'invention trouve une application particulièrement avantageuse avec des tests d'efficacité de catalyseurs de véhicules automobiles effectués lors d'opérations de service après-vente.

Les émissions polluantes des moteurs thermiques équipant les véhicules automobiles sont réglementées par des normes. Les polluants réglementés sont, selon la technologie de moteur thermique considérée, le monoxyde de carbone (CO), les hydrocarbures imbrûlés (HC), les oxydes d'azote (NOx), et les particules qui sont formées lors de la combustion du carburant dans la chambre de combustion puis émises à l'échappement.

Il est connu d'employer un certain nombre de moyens de dépollution dans la ligne d'échappement des moteurs thermiques pour en limiter les émissions de polluants. Ainsi, il est possible d'implanter un catalyseur disposé en amont d'un filtre à particules. Le catalyseur est réalisé à base d'un matériau aux propriétés de stockage réversible d'oxygène en fonction de la richesse des gaz d'échappement. Le catalyseur présente une capacité de stockage en oxygène, dite "OSC" pour "Oxygen Storage Capacity" en anglais. Il permet de stocker l'oxygène lorsque le moteur fonctionne en régime pauvre (rapport air/carburant supérieur à 1) pour le restituer en régime riche (rapport air/carburant inférieur ou égal à 1). Le catalyseur contribue à assurer l'oxydation du monoxyde de carbone (CO) et des hydrocarbures imbrûlés (HC) et la réduction des oxydes d'azote (NOx). La capacité de stockage en oxygène du catalyseur est un indicateur de son vieillissement car plus le catalyseur vieillit, moins il est capable de stocker de l'oxygène.

Il a été constaté au travers de l'analyse des catalyseurs retournés en service après-vente qu'il se produit de nombreuses déposes à tort du catalyseur qui sont coûteuses pour le constructeur de véhicule lorsque le véhicule est encore sous garantie. Cela est dû soit à un manque d'analyse (le réparateur se contente de déposer le catalyseur dès qu'un signal de défaut relatif au fonctionnement du système de dépollution est retourné), soit à un manque de connaissance.

Des procédés de test d'efficacité d'un catalyseur d'une ligne d'échappement de moteur thermique sont connus des documents EP2772636A1 qui correspond au préambule de la revendication 1 ainsi que EP3067527A1, US2016138506A1, WO2016146907A1, DE102008027575A1, qui demande cependant à être améliorés.

L'invention vise à remédier efficacement à cet inconvénient en proposant un procédé de test d'efficacité d'un catalyseur d'une ligne d'échappement de moteur thermique notamment de véhicule automobile, une sonde à oxygène amont et une sonde à oxygène aval étant disposées respectivement en amont et en aval du catalyseur, ledit procédé comportant:
- une étape de mise en fonctionnement du moteur thermique jusqu'à ce que sa température atteigne un seuil de température minimal,
- une étape de vérification du fonctionnement des sondes à oxygène, et
- dans le cas où les sondes à oxygène fonctionnent correctement, ledit procédé comporte en outre:
- une étape de mise en fonctionnement du moteur thermique à un régime élevé,
- une étape de commande d'un retour à un régime de ralenti du moteur thermique,
- une étape de mesure d'une durée de remontée d'une tension de la sonde aval au-dessus d'un seuil de tension prédéterminé, et
- une étape de détermination d'un état du catalyseur en fonction de la durée mesurée de remontée de la tension.

L'invention permet ainsi, grâce à l'analyse de la durée de remontée de la tension de la sonde aval, de discriminer un catalyseur en bon état de fonctionnement par rapport à un catalyseur défectueux. Les réparateurs en service après-vente éviteront ainsi de déposer des catalyseurs qui auraient été détectés "à tort" comme défectueux par le système de contrôle. L'invention présente également l'avantage de pouvoir être réalisée par tout garagiste suivant des critères faciles à vérifier pour déterminer l'état du catalyseur.

Selon une mise en oeuvre, dans le cas où la durée mesurée de remontée de la tension de la sonde aval est inférieure à un seuil de durée, le catalyseur est considéré comme défectueux et dans le cas où la durée mesurée de remontée de la tension est supérieure au seuil de durée, le catalyseur est considéré comme fonctionnel.

Selon une mise en oeuvre, le seuil de durée est un seuil fixe calibrable compris entre 15s et 25s et vaut de préférence de l'ordre de 20s.

Selon une mise en oeuvre, l'étape de vérification du fonctionnement des sondes à oxygène consiste à vérifier:
- que les sondes à oxygène ne renvoient pas de signal de défaut,
- qu'une tension de la sonde amont est située dans une première plage de valeurs prédéfinie, et
- que la tension de la sonde aval est située dans une deuxième plage de valeurs prédéfinie.

Selon une mise en oeuvre, la première plage de valeurs prédéfinie est comprise entre 0,1V et 0,8V environ.

Selon une mise en oeuvre, la deuxième plage de valeurs prédéfinie est comprise entre 0,1V et 0,8V environ.

Selon une mise en oeuvre, le seuil de température minimal du moteur thermique est de l'ordre de 80 degrés Celsius.

Selon une mise en oeuvre, le régime élevé du moteur thermique est compris entre 3000 tr/min et 4000 tr/min et vaut par exemple de l'ordre de 3500 tr/mn.

Selon une mise en oeuvre, le régime élevé du moteur thermique est maintenu pendant une durée minimum de 10 secondes.

L'invention a également pour objet un outil de diagnostic configuré pour une mise en oeuvre du procédé de test d'efficacité d'un catalyseur d'une ligne d'échappement de moteur thermique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une architecture d'une ligne d'échappement d'un moteur thermique comportant un catalyseur dont l'état de fonctionnement est à vérifier via la mise en oeuvre du procédé selon l'invention;
[Fig. 2] La figure 2 est un diagramme des différentes étapes du procédé de test d'efficacité d'un catalyseur de moteur thermique selon la présente invention.

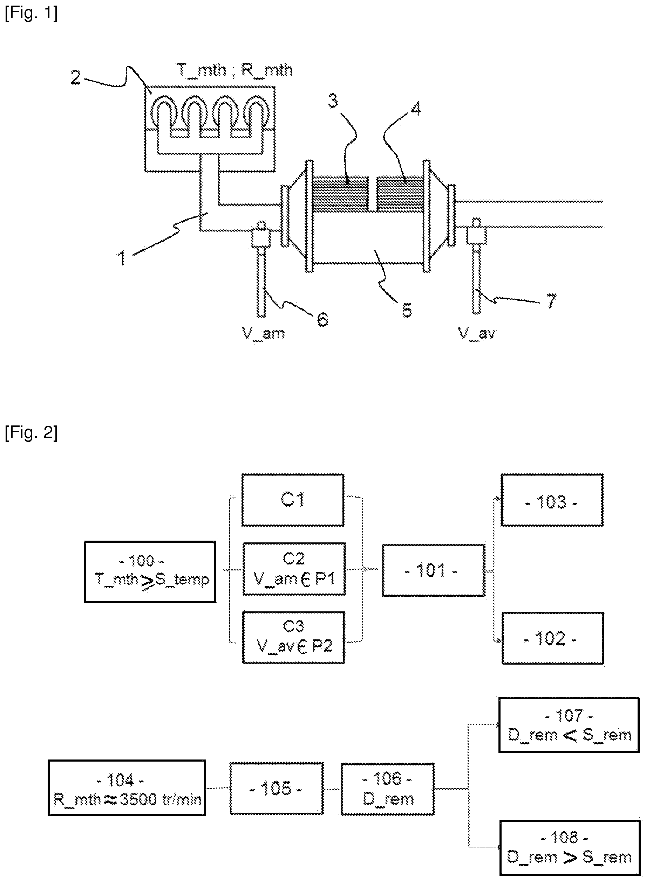

La figure 1 représente schématiquement une partie d'une ligne d'échappement 1 collectant les gaz d'échappement d'un moteur thermique 2 équipant un véhicule automobile. La ligne d'échappement 1 comporte un catalyseur 3 disposé en amont d'un filtre à particules 4. Le catalyseur 3 et le filtre à particules 4 sont regroupés dans une même enveloppe 5 se raccordant au reste de la ligne 1 par ses extrémités (la figure ne représente que la moitié de l'enveloppe 5 pour rendre visibles le catalyseur 3 et le filtre à particules 4).

Le catalyseur 3 est réalisé à base d'un matériau aux propriétés de stockage réversible d'oxygène en fonction de la richesse des gaz d'échappement. Le catalyseur 3 présente une capacité de stockage en oxygène, dite "OSC" pour "Oxygen Storage Capacity" en anglais. Il permet de stocker l'oxygène lorsque le moteur 2 fonctionne en régime pauvre (rapport air/carburant supérieur à 1) pour le restituer en régime riche (rapport air/carburant inférieur ou égal à 1). Le catalyseur 3 contribue à assurer l'oxydation du monoxyde de carbone (CO) et des hydrocarbures imbrûlés (HC) et la réduction des oxydes d'azote (NOx). La capacité de stockage en oxygène du catalyseur 3 est un indicateur de son vieillissement car plus le catalyseur 3 vieillit, moins il est capable de stocker de l'oxygène.

La ligne d'échappement 1 est également munie de deux sondes à oxygène 6, 7. Une sonde amont 6 et une sonde aval 7 sont disposées respectivement en amont et en aval du catalyseur 3. Ces sondes 6, 7 de type connu pourront prendre la forme de sondes de type linéaire ou stoechiométrique.

On décrit ci-après, en référence avec la figure 2, le procédé selon l'invention de test d'efficacité du catalyseur 3 de la ligne d'échappement 1. Les différentes mesures détaillées ci-après pourront être effectuées en statique à vide en atelier en mettant en place un tuyau d'extraction des gaz d'échappement ou en extérieur.

Ce procédé comporte une étape 100 de mise en fonctionnement du moteur thermique 2 jusqu'à ce que sa température T_mth atteigne un seuil de température minimal S_temp, par exemple de l'ordre de 80 degrés Celsius. Par de "l'ordre de", on entend une variation de plus ou moins 10% autour de cette valeur. Il est à noter que la température du moteur thermique T_mth est la température du liquide de refroidissement, notamment à base d'eau et d'anti-gel, circulant dans un circuit correspondant du moteur.

L'opérateur vérifie ensuite, dans une étape 101, le bon fonctionnement des sondes 6, 7 en s'assurant que les trois conditions suivantes C1-C3 sont respectées:
- Condition C1: les sondes 6, 7 ne renvoient pas de signal de défaut.
- Condition C2: pour une sonde de type stoechiométrique, une tension V_am de la sonde amont 6 est située dans une première plage P1 de valeurs prédéfinie comprise entre 0,1V et 0,8V environ. La valeur de tension V_am de la sonde amont 6 n'est pas stable. En variante, pour une sonde linéaire de type lambda, on s'assure que le signal de sortie correspondant à l'inverse de la richesse du mélange air-carburant est compris entre 0.9 et 1.11.
- Condition C3: une tension V_av de la sonde aval 7 est située dans une deuxième plage P2 de valeurs prédéfinie comprise entre 0,1V et 0,8V environ. La tension de sortie V_av la sonde aval pourra être à un niveau stable ou osciller.
La première plage P1 et la deuxième plage P2 sont ici identiques mais pourraient en variante être différentes en fonction du modèle de sonde utilisé.

Si une des trois conditions C1-C3 n'est pas vérifiée, il est alors nécessaire d'arrêter le test (cf. étape 102) et de rechercher l'origine du problème sur les sondes 6, 7 elles-mêmes, la connectique, ou le faisceau électrique, etc... Il ne faut donc en aucun cas remplacer le catalyseur 3.

Dans le cas où les sondes 6, 7 fonctionnent correctement, on continue la mise en oeuvre du procédé (cf. étape 103).

A cet effet, le moteur thermique 2 est mis en fonctionnement dans une étape 104 à un régime R_mth élevé à vide compris entre 3000 tr/min et 4000 tr/min et valant par exemple de l'ordre de 3500 tr/mn. Le régime choisi doit être maintenu notamment avec un positionnement stable de la pédale d'accélération. De préférence, le régime élevé du moteur thermique 2 est maintenu pendant une durée minimum de 10 secondes.

On commande ensuite, dans une étape 105 un retour à un régime de ralenti du moteur thermique 2 compris entre 700 tr/min et 900 tr/min, notamment par relâchement de la pédale d'accélération. Tout en restant au régime de ralenti, le réparateur mesure ensuite, dans une étape 106, une durée D_rem de remontée de la tension V_av de la sonde aval 7 au-dessus d'un seuil de tension prédéterminé, notamment de l'ordre de 0.6V.

En l'absence de signal de défaut, notamment de type "P0420" pour un moteur Peugeot ("Marque déposée"), il n'est pas nécessaire de changer le catalyseur 3.

En présence d'un signal de défaut, l'état du catalyseur 3 est déterminé en fonction de la durée D_rem de remontée de la tension mesurée V_av. Dans le cas où la durée D_rem mesurée de remontée de la tension V_av de la sonde aval 7 est inférieure à un seuil de durée S_rem, le catalyseur 3 est considéré comme défectueux et doit donc être remplacé (cf. étape 107). Dans le cas où la durée D_rem mesurée de remontée de la tension mesurée de la tension V_av est supérieure au seuil de durée S_rem, le catalyseur 3 est considéré comme fonctionnel (cf. étape 108). Il n'y a donc pas lieu de le remplacer. Le seuil de durée S_rem est un seuil fixe calibrable compris entre 15s et 25s et vaut de préférence de l'ordre de 20s.

Le procédé selon l'invention pourra être mis en oeuvre de façon manuelle par un garagiste ou de façon automatique par un outil de diagnostic qui pourra effectuer la vérification du fonctionnement des sondes via une interaction avec le calculateur moteur, piloter directement le régime moteur sans avoir à agir sur la pédale d'accélération, et déterminer la durée D_rem de remontée de la tension V_av de la sonde aval 7 pour en déduire l'état du catalyseur 3.

## Revendications

1. Procédé de test d'efficacité d'un catalyseur (3) d'une ligne d'échappement (1) de moteur thermique (2) notamment de véhicule automobile, une sonde à oxygène amont (6) et une sonde à oxygène aval (7) étant disposées respectivement en amont et en aval du catalyseur (3), ledit procédé comportant :
- une étape (100) de mise en fonctionnement du moteur thermique (2) jusqu'à ce que sa température (T_mth) atteigne un seuil de température minimal (S_temp),
- une étape (101) de vérification du fonctionnement des sondes à oxygène (6, 7), et
**caractérisé en ce que** dans le cas où les sondes à oxygène (6, 7) fonctionnent correctement, ledit procédé comporte en outre:
- une étape (104) de mise en fonctionnement du moteur thermique (2) à un régime élevé,
- une étape (105) de commande d'un retour à un régime de ralenti du moteur thermique (2),
- une étape (106) de mesure d'une durée (D_rem) de remontée d'une tension (V_av) de la sonde aval (7) au-dessus d'un seuil de tension prédéterminé, et
- une étape (107, 108) de détermination d'un état du catalyseur (3) en fonction de la durée (D_rem) mesurée de remontée de la tension (V_av).

2. Procédé selon la revendication 1, **caractérisé en ce que** dans le cas où la durée (D_rem) mesurée de remontée de la tension (V_av) de la sonde aval (7) est inférieure à un seuil de durée (S_rem), le catalyseur (3) est considéré comme défectueux et dans le cas où la durée (D_rem) mesurée de remontée de la tension (V_av) est supérieure au seuil de durée (S_rem), le catalyseur (3) est considéré comme fonctionnel.

3. Procédé selon la revendication 2, **caractérisé en ce que** le seuil de durée (S_rem) est un seuil fixe calibrable compris entre 15s et 25s et vaut de préférence de l'ordre de 20s.

4. Procédé selon l'une quelconque des revendications 1 à 3, **caractérisé en ce que** l'étape (101) de vérification du fonctionnement des sondes à oxygène (6, 7) consiste à vérifier:
- que les sondes à oxygène (6, 7) ne renvoient pas de signal de défaut,
- qu'une tension (V_am) de la sonde amont (6) est située dans une première plage de valeurs prédéfinie (P1), et
- que la tension (V_av) de la sonde aval (7) est située dans une deuxième plage de valeurs prédéfinie (P2).

5. Procédé selon la revendication 4, **caractérisé en ce que** la première plage de valeurs prédéfinie (P1) est comprise entre 0,1V et 0,8V environ.

6. Procédé selon la revendication 4 ou 5, **caractérisé en ce que** la deuxième plage de valeurs prédéfinie (P2) est comprise entre 0,1V et 0,8V environ.

7. Procédé selon l'une quelconque des revendications 1 à 6, **caractérisé en ce que** le seuil de température minimal (S_temp) du moteur thermique est de l'ordre de 80 degrés Celsius.

8. Procédé selon l'une quelconque des revendications 1 à 7, **caractérisé en ce que** le régime (R_mth) élevé du moteur thermique (2) est compris entre 3000 tr/min et 4000 tr/min et vaut par exemple de l'ordre de 3500 tr/mn.

9. Procédé selon l'une quelconque des revendications 1 à 8, **caractérisé en ce que** le régime élevé (R_mth) du moteur thermique (2) est maintenu pendant une durée minimum de 10 secondes.

10. Outil de diagnostic **caractérisé en ce qu'**il est configuré pour une mise en oeuvre du procédé de test d'efficacité d'un catalyseur (3) d'une ligne d'échappement (1) de moteur thermique (2) tel que défini selon l'une quelconque des revendications précédentes.

## Patentansprüche

1. Verfahren zur Prüfung der Wirksamkeit eines Katalysators (3) eines Abgasstrangs (1) einer Wärmekraftmaschine (2), insbesondere eines Kraftfahrzeugs, wobei jeweils eine vorgeschaltete Sauerstoffsonde (6) und eine nachgeschaltete Sauerstoffsonde (7) angeordnet sind vor und nach dem Katalysator (3), **dadurch gekennzeichnet, dass** das Verfahren Folgendes umfasst:
- einen Schritt (100) des Startens der Wärmekraftmaschine (2), bis ihre Temperatur ( T_mth ) einen minimalen Temperaturschwellenwert ( S_temp ) erreicht,
einen Schritt (101) zum Überprüfen der Funktion der Sauerstoffsonden (6, 7) und
- für den Fall, dass die Sauerstoffsonden (6, 7) ordnungsgemäß funktionieren, umfasst das Verfahren außerdem :
- einen Schritt (104) zum Starten der Wärmekraftmaschine (2) mit hoher Drehzahl,
- einen Schritt (105) zum Steuern einer Rückkehr zu einer Leerlaufdrehzahl der Wärmekraftmaschine (2),
- einen Schritt (106) zum Messen einer Dauer ( D_rem ) des Anstiegs einer Spannung ( V_av ) der nachgeschalteten Sonde (7) über einen vorgegebenen Spannungsschwellenwert, und
- einen Schritt (107, 108) des Bestimmens eines Zustands des Katalysators (3) als Funktion der gemessenen Dauer ( D_rem ) des Spannungsanstiegs (V_av).

2. Verfahren nach Anspruch 1, **dadurch gekennzeichnet, dass** der Katalysator (3) als defekt gilt, wenn die gemessene Dauer ( D_rem ) des Spannungsanstiegs ( V_av ) der nachgeschalteten Sonde (7) kleiner als ein Dauerschwellenwert ( S_rem ) ist und in dem Fall, in dem die gemessene Dauer ( D_rem ) des Spannungsanstiegs ( V_av ) größer als der Dauerschwellenwert ( S_rem ) ist, wird der Katalysator (3) als funktionsfähig angesehen.

3. Verfahren nach Anspruch 2, **dadurch gekennzeichnet, dass** der Dauerschwellenwert ( S_rem ) ein fester Schwellenwert ist, der zwischen 15 und 25 Sekunden kalibriert werden kann und vorzugsweise in der Größenordnung von 20 Sekunden liegt.

4. Verfahren nach einem der Ansprüche 1 bis 3, **dadurch gekennzeichnet, dass** der Schritt (101) der Überprüfung der Funktion der Sauerstoffsonden (6, 7) darin besteht, Folgendes zu überprüfen:
- dass die Sauerstoffsonden (6, 7) kein Fehlersignal senden,
- dass eine Spannung ( V_am ) der vorgeschalteten Sonde (6) in einem ersten vordefinierten Wertebereich (P1) liegt, und
- dass die Spannung (V_av) der nachgeschalteten Sonde (7) in einem zweiten vordefinierten Wertebereich (P2) liegt.

5. Verfahren nach Anspruch 4, **dadurch gekennzeichnet, dass** der erste vordefinierte Wertebereich (P1) zwischen etwa 0,1 V und 0,8 V liegt.

6. Verfahren nach Anspruch 4 oder 5, **dadurch gekennzeichnet, dass** der zweite vorgegebene Wertebereich (P2) zwischen etwa 0,1 V und 0,8 V liegt.

7. Verfahren nach einem der Ansprüche 1 bis 6, **dadurch gekennzeichnet, dass** die minimale Temperaturschwelle ( S_temp ) der Wärmekraftmaschine in der Größenordnung von 80 Grad Celsius liegt.

8. Verfahren nach einem der Ansprüche 1 bis 7, **dadurch gekennzeichnet, dass** die hohe Drehzahl ( R_mth ) der Wärmekraftmaschine (2) zwischen 3000 U/min und 4000 U/min liegt und beispielsweise in der Größenordnung von 3500 U/min liegt.

9. Verfahren nach einem der Ansprüche 1 bis 8, **dadurch gekennzeichnet, dass** die hohe Drehzahl (R_mth ) der Wärmekraftmaschine (2) für eine Mindestdauer von 10 Sekunden aufrechterhalten wird.

10. Diagnosegerät, **dadurch gekennzeichnet, dass** es für die Umsetzung des Verfahrens zum Testen der Effizienz eines Katalysators (3) einer Abgasleitung (1) einer Wärmekraftmaschine (2) gemäß einem der vorhergehenden Ansprüche konfiguriert ist.

## Claims

1. Method for testing the effectiveness of a catalyst (3) of an exhaust line (1) of a thermal engine (2) in particular of a motor vehicle, an upstream oxygen probe (6) and a downstream oxygen probe (7 ) being arranged respectively upstream and downstream of the catalyst (3), **characterized in that** said process comprises:
- a step (100) of starting the heat engine (2) until its temperature ( T_mth ) reaches a minimum temperature threshold ( S_temp ),
- a step (101) of checking the operation of the oxygen probes (6, 7), and
in the case where the oxygen probes (6, 7) operate correctly, said method further comprises :
- a step (104) of starting the heat engine (2) at a high speed,
- a step (105) of controlling a return to an idling speed of the thermal engine (2),
- a step (106) of measuring a duration ( D_rem ) of rising a voltage ( V_av ) of the downstream probe (7) above a predetermined voltage threshold, and
- a step (107, 108) of determining a state of the catalyst (3) as a function of the measured duration ( D_rem ) of voltage rise ( V_av ).

2. Method according to claim 1, **characterized in that** in the case where the measured duration ( D_rem ) of voltage rise ( V_av ) of the downstream probe (7) is less than a duration threshold ( S_rem ), the catalyst (3 ) is considered defective and in the case where the measured duration ( D_rem ) of voltage rise ( V_av ) is greater than the duration threshold ( S_rem ), the catalyst (3) is considered functional.

3. Method according to claim 2, **characterized in that** the duration threshold ( S_rem ) is a fixed threshold that can be calibrated between 15s and 25s and is preferably of the order of 20s.

4. Method according to any one of claims 1 to 3, **characterized in that** the step (101) of checking the operation of the oxygen probes (6, 7) consists of checking:
- that the oxygen probes (6, 7) do not send a fault signal,
- that a voltage ( V_am ) of the upstream probe (6) is located in a first predefined range of values (P1), and
- that the voltage ( V_av ) of the downstream probe (7) is located in a second predefined range of values (P2).

5. Method according to claim 4, **characterized in that** the first predefined range of values (P1) is between approximately 0.1V and 0.8V.

6. Method according to claim 4 or 5, **characterized in that** the second predefined value range (P2) is between approximately 0.1V and 0.8V.

7. Method according to any one of claims 1 to 6, **characterized in that** the minimum temperature threshold ( S_temp ) of the heat engine is of the order of 80 degrees Celsius.

8. Method according to any one of claims 1 to 7, **characterized in that** the high speed ( R_mth ) of the heat engine (2) is between 3000 rpm and 4000 rpm and is for example of the order of 3500 rpm.

9. Method according to any one of claims 1 to 8, **characterized in that** the high speed ( R_mth ) of the heat engine (2) is maintained for a minimum duration of 10 seconds.

10. Diagnostic tool **characterized in that** it is configured for implementing the method of testing the efficiency of a catalyst (3) of an exhaust line (1) of a heat engine (2) as defined according to any of the preceding claims.
